# EUROPÄISCHE PATENTSCHRIFT

(11) **EP 2 042 021 B1**
(45) Veröffentlichungstag und Bekanntmachung des Hinweises auf die Patenterteilung: **29.12.2010**
(21) Anmeldenummer: 08016746.3
(22) Anmeldetag: 24.09.2008
(51) Int. Cl.: A01D 46/26

(54) **Haken für ein Erntegerät und Überzug für einen Haken**
Hook for a harvesting device and covering for a hook
Crochet pour une moissonneuse et revêtement pour un crochet

(30) Priorität: 25.09.2007 DE 102007045675
(43) Veröffentlichungstag der Anmeldung: 01.04.2009
(73) Patentinhaber: Andreas Stihl AG & Co. KG, 71336 Waiblingen (DE)
(72) Erfinder: Götzel, Arne, 71522 Backnang (DE); Menzel, Johannes K., 73529 Rechberg (DE); Schneider, Andreas, 71384 Weinstadt (DE); Machens, Kai-Ulrich, 70193 Stuttgart (DE); Heinzelmann, Georg, 71522 Backnang (DE)
(74) Vertreter: Wasmuth, Rolf

(56) Entgegenhaltungen:
- EP-A- 1 095 554
- DE-U1- 20 104 852

## Beschreibung

Die Erfindung betrifft einen Haken für das Ende einer Rüttelstange eines Erntegeräts der im Oberbegriff des Anspruchs 1 angegebenen Gattung und einen Überzug zur formschlüssigen und/oder kraftschlüssigen Fixierung an einem am Ende einer Rüttelstange eines Erntegeräts angeordneten Haken der im Oberbegriff des Anspruchs 12 angegebenen Gattung.

Aus der DE 201 04 852 U1 ist ein Haken für das Ende einer Rüttelstange an einem Erntegerät bekannt, der einen Überzug aufweist. Der Haken besitzt ein Griffmaul, das sich zum Boden des Griffmauls hin verengt. Der Überzug umgibt den Haken vollständig und besitzt an seiner der Grifföffnung des Griffmauls abgewandten Seite einen Schlitz zur Montage an dem Haken.

Der Erfindung liegt die Aufgabe zugrunde, einen Haken zu schaffen, der ein geringes Gewicht besitzt und dessen Überzug einfach austauschbar ist. Eine weitere Aufgabe der Erfindung liegt darin, einen Überzug für einen Haken zu schaffen, der einfach austauschbar ist.

Diese Aufgabe wird durch einen Haken mit den Merkmalen des Anspruchs 1 gelöst. Bezüglich des Überzugs wird die Aufgabe durch einen Überzug mit den Merkmalen des Anspruchs 12 gelöst.

Es hat sich gezeigt, dass die Montage und Demontage des Überzugs an dem Haken durch parallele Führungsleisten erheblich vereinfacht werden kann. Auf die Führungsleisten wird der Überzug aufgeschoben. Dadurch sind die bei der Montage oder Demontage des Hakens wirkenden Kräfte erheblich verringert. Der Überzug wird im Wesentlichen an seinem Rand aufgeweitet. In dem Bereich der Schenkel, in dem die Führungsleisten angeordnet sind, muss der Überzug insbesondere an der formstabil ausgebildeten Innenseite nicht aufgeweitet werden. Dies reduziert die zum Austausch des Überzugs benötigten Kräfte erheblich.

Vorteilhaft ist der Überzug im Verbindungsbereich des Grundkörpers formschlüssig an dem Grundkörper gehalten. Durch die formschlüssige Fixierung des Überzugs werden grundsätzlich keine zusätzlichen Verbindungselemente wie Schrauben, Klemmen oder andere Sicherungselemente benötigt. Dadurch ist ein einfacher und schneller Austausch des Überzugs möglich. Der Überzug kann ohne Werkzeug gewechselt werden. Eine einfache formschlüssige Fixierung ergibt sich, wenn der Überzug mindestens einen Absatz aufweist, der den Quersteg im Verbindungsbereich hintergreift. Zur Montage wird der Absatz nach außen ausgelenkt, so dass der Überzug über den Quersteg im Verbindungsbereich geschoben werden kann. Der Absatz schnappt anschließend aufgrund der elastischen Rückstellkräfte des Überzugs hinter dem Quersteg ein. Dadurch ist der Überzug formschlüssig an dem Haken gesichert. Eine gute Sicherung wird erzielt, wenn der Überzug den Quersteg im Verbindungsbereich des Grundkörpers vollständig umschließt. Dadurch kann ein unbeabsichtigtes Lösen des Überzugs von dem Haken im Betrieb vermieden werden. Der Quersteg ist dabei von dem Überzug vorteilhaft eng umschlossen. Es ist vorgesehen, dass in dem Überzug eine Aufnahme für den Grundkörper gebildet ist, deren Breite im Bereich der Schenkel des Überzugs und im Bereich des Absatzes etwa der Breite des Querstegs entspricht. Dadurch ist der Überzug auf dem Haken sicher und formschlüssig sowohl in Richtung der Führungsleisten als auch in Querrichtung hierzu gehalten.

Zur zusätzlichen Fixierung ist vorgesehen, dass der Überzug im Bereich der freien Enden seiner Schenkel reibschlüssig an dem Grundkörper gehalten ist. Dies kann auf einfache Weise durch entsprechende Dimensionierung der Aufnahme für den Haken erreicht werden. Dadurch, dass der Reibschluss im Bereich der freien Enden der Schenkel des Überzugs gebildet ist, kann der Überzug leicht aufgeschoben werden, bis der Haken in den Bereich der freien Enden gelangt. Erst dann werden erhöhte Kräfte zum Aufschieben des Überzugs benötigt. Dadurch kann eine gute Sicherung des Überzugs auf dem Haken erreicht werden, und gleichzeitig werden die benötigten Betätigungskräfte gering gehalten.

Vorteilhaft besitzt der Überzug an seiner dem Griffmaul abgewandten Außenseite einen Schlitz. Um eine einfache Montage und Demontage des Überzugs zu erreichen, ist vorgesehen, dass der Schlitz sich über die gesamte Außenseite des Überzugs vom freien Ende des ersten Schenkels des Überzugs zum freien Ende des zweiten Schenkels erstreckt. Dadurch kann der Überzug bei der Montage oder Demontage über seine gesamte Länge mit geringen Kräften aufgeweitet werden. Dadurch kann ein fester Sitz des Überzugs auf dem Haken bei vergleichsweise geringen Betätigungskräften erreicht werden. Es ist vorgesehen, dass der Schlitz benachbart zu mindestens einem freien Ende eines Schenkels des Überzugs eine Breite aufweist, die etwa der Breite der Grundfläche des Grundkörpers in diesem Bereich entspricht. Der Überzug umschließt den Grundkörper des Hakens damit im Bereich der freien Enden der Schenkel eng, so dass in diesem Bereich eine gute Fixierung und eine Formstabilität des Überzugs erreicht werden.

Um ein geringes Gewicht des Hakens zu erreichen, ist vorgesehen, dass die Grundfläche über die gesamte Länge des Schlitzes durch den Schlitz aus dem Überzug ragt. Der Überzug ist dabei insbesondere nur im Bereich des Querstegs sowie im Verbindungsbereich angeordnet. Dadurch kann der Überzug mit geringem Gewicht hergestellt werden.

Zur Erzielung eines festen Sitzes des Überzugs auf dem Haken kann alternativ vorgesehen sein, dass sich der Schlitz an der Außenseite des Überzugs vom freien Ende eines ersten Schenkels bis mindestens zum Verbindungsbereich erstreckt, und dass ein zweiter Schenkel des Überzugs an der Außenseite des Überzugs geschlossen ausgebildet ist. Dadurch umschließt der Überzug den Grundkörper des Hakens am zweiten Schenkel des Überzugs vollständig. Der Überzug liegt dabei vorteilhaft am gesamten Umfang am Grundkörper des Hakens an, so dass ein fester Sitz des Überzugs an dem Grundkörper des Hakens erreicht wird. Vorteilhaft ist der Schlitz im Bereich eines Anschlussstutzens für die Rüttelstange verbreitert ausgebildet. Der verbreiterte Abschnitt des Schlitzes bewirkt gleichzeitig eine verminderte Formstabilität des Überzugs in diesem Bereich, so dass der Überzug zur Montage und Demontage einfach aufgeweitet werden kann.

Eine gute Krafteinleitung in den Haken wird erreicht, wenn der senkrecht zur Bewegungsachse der Rüttelstange gemessene Abstand der Mittelachse eines Anschlussstutzens für die Rüttelstange zu dem im Verbindungsbereich angeordneten Boden des Griffmauls kleiner als der Abstand zu den freien Enden der Schenkel des Überzugs ist. Im Betrieb werden Äste üblicherweise nah am Boden des Griffmauls gegriffen, so dass die Mittelachse des Anschlussstutzens für die Rüttelstange vorteilhaft in diesem Bereich anzuordnen ist.

Um eine hohe Steifigkeit des Grundkörpers des Hakens bei geringem Gewicht zu erreichen, ist der Haken vorteilhaft gewichtsoptimiert ausgebildet. Hierzu ist vorgesehen, dass die Grundfläche des Hakens im Verbindungsbereich breiter ausgebildet ist als im Bereich der Schenkel. Im Verbindungsbereich ist die im Betrieb wirkende Belastung üblicherweise höher, so dass in diesem Bereich ein höheres Trägheitsmoment des Grundkörpers gegen Biegung vorteilhaft ist. Ein erhöhtes Trägheitsmoment gegen Biegung lässt sich durch die verbreiterte Grundfläche auf einfache Weise erreichen. Die verbreiterte Grundfläche führt zu einer starken Erhöhung des Trägheitsmoments bei geringer Erhöhung des Gewichts des Hakens.

Um ein geringes Gewicht des Hakens bei hoher Stabilität zu erreichen, ist vorgesehen, dass die senkrecht zum Quersteg gemessene Breite der Grundfläche im Bereich der Schenkel von den freien Enden der Schenkel zum Verbindungsbereich zunimmt. Es ist vorgesehen, dass der Quersteg eine senkrecht zur Ebene der Grundfläche gemessene Dicke aufweist, die größer als die parallel zur Querebene gemessene Breite des Querstegs ist. Die Dicke beträgt dabei vorteilhaft etwa das Zweifache bis etwa das Zehnfache der Breite. Der Quersteg bildet mit der Grundfläche einen T-förmigen Querschnitt des Hakens, der zu einer hohen Festigkeit des Hakens führt. Die Dicke des Querstegs beträgt dabei vorteilhaft etwa 70 % bis 100 % der maximalen Breite der Grundfläche im Verbindungsbereich. Um ein geringes Gewicht des Hakens zu erreichen, ist vorgesehen, dass der Haken aus Leichtmetall besteht. Insbesondere besteht der Haken aus Magnesium. Der Haken ist vorteilhaft in einem Magnesium-Druckgussverfahren hergestellt.

Für einen Überzug zur formschlüssigen und/oder kraftschlüssigen Fixierung an einem am Ende einer Rüttelstange eines Erntegeräts angeordneten Haken, der einteilig und U-förmig ausgebildet ist und zwei Schenkel und einen Verbindungsbereich zwischen den Schenkeln aufweist, wobei in dem Überzug eine Aufnahme für den Haken ausgebildet ist und wobei der Überzug ein Griffmaul begrenzt, ist vorgesehen, dass die Schenkel des Überzugs ausgehend von den freien Enden der Schenkel über mindestens 50 % der Tiefe des Griffmauls parallel zueinander verlaufen. Dadurch, dass der Überzug formschlüssig und/oder kraftschlüssig an dem Haken zu fixieren ist, ist ein enger Sitz des Überzugs an dem Haken erforderlich. Dadurch, dass die Schenkel des Überzugs über mindestens 50 % der Tiefe des Griffmauls parallel zueinander verlaufen, kann trotz des engen Sitzes des Überzugs an dem Haken eine einfache Montage und Demontage des Überzugs an dem Haken erreicht werden. Insbesondere verlaufen die Schenkel des Überzugs über mindestens 50 % der Tiefe, vorzugsweise 70 % der Tiefe des Griffmauls parallel zueinander.

Vorteilhaft weist der Überzug im Verbindungsbereich mindestens einen Absatz zur formschlüssigen Fixierung des Überzugs auf dem Haken auf. Vorteilhaft werden zur Fixierung des Überzugs keine zusätzlichen Befestigungsmittel benötigt. Um eine ausreichende Steifigkeit des Überzugs im Verbindungsbereich zu erreichen, ist vorgesehen, dass der Überzug seitlich des Absatzes mindestens einen Versteifungsabschnitt aufweist. Der Versteifungsabschnitt verhindert ein unbeabsichtigtes Aufweiten des Überzugs im Verbindungsbereich und damit ein unbeabsichtigtes Lösen des Absatzes hinter dem Quersteg des Hakens. Zur Vereinfachung der Montage oder Demontage des Überzugs ist vorgesehen, dass der Überzug im Verbindungsbereich mindestens eine Montageschräge aufweist.

Vorteilhaft weist der Überzug einen Schlitz auf, der sich über die gesamte Außenseite des Überzugs vom freien Ende des ersten Schenkels zum freien Ende des zweiten Schenkels erstreckt. Alternativ kann vorgesehen sein, dass sich der Schlitz an der Außenseite des Überzugs vom freien Ende eines ersten Schenkels bis mindestens zum Verbindungsbereich erstreckt, und dass ein zweiter Schenkel des Überzugs an der Außenseite des Überzugs geschlossen ausgebildet ist. Der Schlitz ist vorteilhaft in einem mittleren Bereich mindestens eines Schenkels verbreitert ausgebildet. Der Überzug kann bei der Montage und der Demontage einfach aufgeweitet werden. Um sicherzustellen, dass der Überzug im Verbindungsbereich an dem Haken anliegt, ist vorgesehen, dass die den Schlitz im Verbindungsbereich begrenzenden Abschnitte des Überzugs aufeinander zu vorgespannt sind. Diese Bereiche bilden vorteilhaft Greiflaschen, an denen der Überzug aufgeweitet und demontiert bzw. montiert werden kann. Der Überzug ist vorteilhaft spiegelsymmetrisch ausgebildet. Dadurch kann der Überzug nach Abnutzung an einer Seite gewendet werden. Die Dicke des Überzugs zwischen Aufnahme und Griffmaul beträgt im Bereich der Schenkel vorteilhaft etwa 5 mm bis etwa 15 mm. Dieser Bereich bildet im Betrieb den Verschleißbereich des Überzugs. Dadurch, dass dieser Bereich vergleichsweise dick ausgeführt wird, kann eine hohe Lebensdauer des Überzugs des Hakens erreicht werden.

Vorteilhaft besteht der Überzug aus Naturkautschuk, der insbesondere eine Härte von etwa 60 bis etwa 80 Shore aufweist. Als besonders vorteilhaft hat sich Naturkautschuk mit einer Härte von etwa 70 Shore herausgestellt. Bei dieser Härte des Überzugs ergibt sich ein vergleichsweise geringer Verschleiß, so dass eine hohe Lebensdauer des Überzugs erreicht werden kann. Gleichzeitig wird der zu rüttelnde Baum geschont.

Ausführungsbeispiele der Erfindung werden im Folgenden anhand der Zeichnung erläutert. Es zeigen:
- Fig. 1: eine schematische Darstellung eines Erntegeräts,
- Fig. 2: den Haken des Erntegeräts aus Fig. 1 in Seitenansicht,
- Fig. 3: eine perspektivische Darstellung des Grundkörpers des Hakens aus Fig. 2,
- Fig. 4: den Überzug des Hakens aus Fig. 2 in perspektivischer Darstellung in dem Zustand, in dem sich der Überzug an dem Haken befindet,
- Fig. 5: eine Seitenansicht des Überzugs aus Fig. 4,
- Fig. 6: eine Seitenansicht in Richtung des Pfeils VI in Fig. 5,
- Fig. 7: einen Schnitt entlang der Linie VII-VII in Fig. 5,
- Fig. 8: einen Schnitt entlang der Linie VIII-VIII in Fig. 5,
- Fig. 9: einen Schnitt entlang der Linie IX-IX in Fig. 5,
- Fig. 10: eine perspektivische Darstellung des Überzugs des Hakens in nicht an dem Grundkörper des Hakens angeordnetem Zustand,
- Fig. 11: eine Seitenansicht des Überzugs aus Fig. 10,
- Fig. 12: eine Seitenansicht in Richtung des Pfeils XII in Fig. 11,
- Fig. 13: einen Schnitt entlang der Linie XIII-XIII in Fig. 11,
- Fig. 14: einen Schnitt entlang der Linie XIV-XIV in Fig. 11,
- Fig. 15: einen Schnitt entlang der Linie XV-XV in Fig. 11,
- Fig. 16: eine perspektivische Darstellung eines Ausführungsbeispiels eines Hakens eines Erntegeräts,
- Fig. 17: eine perspektivische Explosionsdarstellung des Hakens aus Fig. 16,
- Fig. 18: eine perspektivische Darstellung des Überzugs des Hakens aus Fig. 16 in dem Zustand, in dem sich der Überzug an dem Haken befindet,
- Fig. 19: eine Seitenansicht des Überzugs aus Fig. 18,
- Fig. 20: eine Seitenansicht in Richtung des Pfeils XX in Fig. 19,
- Fig. 21: einen Schnitt entlang der Linie XXI-XXI in Fig. 19,
- Fig. 22: einen Schnitt entlang der Linie XXII-XXII in Fig. 19,

- Fig. 23: eine perspektivische Darstellung des Überzugs des Hakens aus Fig. 16 in nicht an dem Grundkörper des Hakens angeordnetem Zustand,
- Fig. 24: eine Seitenansicht des Überzugs aus Fig. 23,
- Fig. 25: eine Seitenansicht in Richtung des Pfeils XXV in Fig. 24,
- Fig. 26: einen Schnitt entlang der Linie XXVI-XXVI in Fig. 24,
- Fig. 27: eine perspektivische Darstellung des Überzugs entsprechend Fig. 10 mit zusätzlich angeordneten Verschlussklammern,
- Fig. 28: eine Seitenansicht auf den Überzug nach Fig. 27,
- Fig. 29: eine Ansicht auf eine Schmalseite des Überzugs nach Fig. 27.

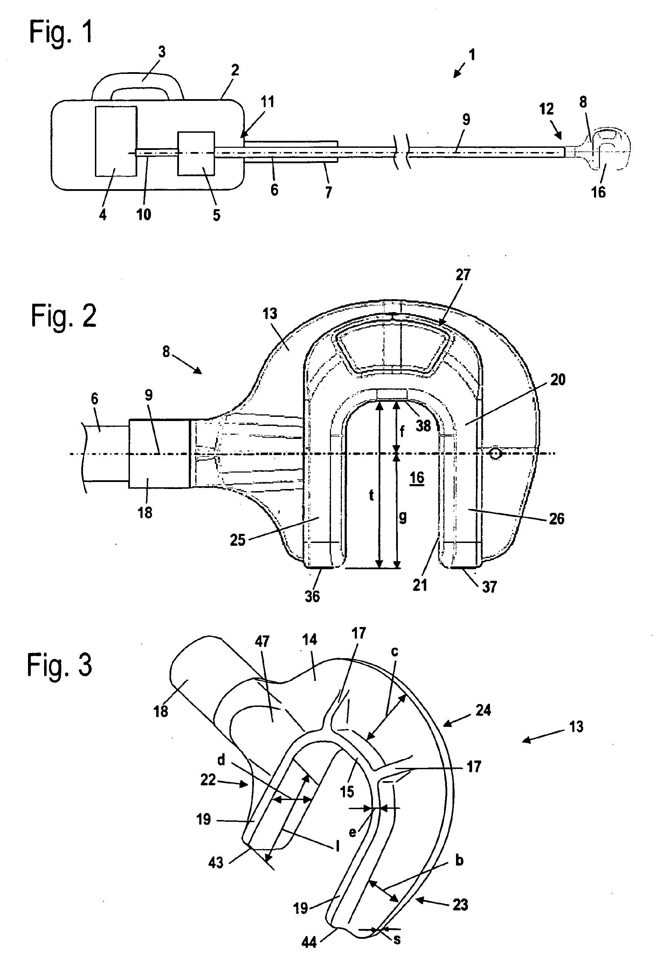

Das in Fig. 1 gezeigte Erntegerät 1 besitzt ein Gehäuse 2, an dem ein schematisch dargestellter Handgriff 3 zum Halten des Erntegeräts 1 im Betrieb angeordnet ist. Anstatt des Handgriffs 3 oder zusätzlich hierzu kann auch ein Tragegurt für das Erntegerät 1 vorgesehen sein. Das Erntegerät 1 kann beispielsweise ein Olivenschüttler, Kaffeeernter oder dergleichen sein. In dem Gehäuse 2 ist ein Antriebsmotor 4 angeordnet, der insbesondere ein Verbrennungsmotor ist. Der Antriebsmotor 4 kann beispielsweise ein Zweitaktmotor oder ein gemischgeschmierter Viertaktmotor sein. Als Antriebsmotor 4 kann jedoch auch ein Elektromotor vorgesehen sein. Der Antriebsmotor 4 treibt eine Welle 10 an, die bei der Gestaltung des Antriebsmotors 4 als Verbrennungsmotor die Kurbelwelle ist. Die Welle 10 ist über ein Getriebe 5 mit einer Rüttelstange 6 verbunden. Die Rüttelstange 6 wird über das Getriebe 5 in Richtung einer Bewegungsachse 9 hin- und hergehend angetrieben. Benachbart zum Gehäuse 2 ist die Rüttelstange 6 von einem Schutzrohr 7 umgeben. Die Rüttelstange 6 besitzt ein erstes Ende 11, das mit dem Getriebe 5 verbunden ist. An einem gegenüberliegenden, zweiten Ende 12 der Rüttelstange 6 ist ein Haken 8 angeordnet, der zum Greifen von Ästen dient. Der Haken 8 besitzt ein Griffmaul 16, mit dem der Haken 8 an einem zu rüttelnden Ast eingehakt werden kann.

Wie Fig. 2 zeigt, besitzt der Haken 8 einen Grundkörper 13, an dem ein Anschlussstutzen 18 angeordnet ist, der auf die Rüttelstange 6 aufgesetzt ist. An dem Grundkörper 13 des Hakens 8 ist ein Überzug 20 fixiert, der aus Gummi, vorteilhaft aus Naturkautschuk besteht. Der Überzug besitzt eine Härte von etwa 60 bis etwa 80 Shore. Als vorteilhaft hat sich eine Härte von etwa 70 Shore herausgestellt. Der Überzug 20 ist U-förmig ausgebildet und begrenzt das Griffmaul 16. Das U des Überzugs 20 wird durch zwei Schenkel 25 und 26 gebildet, die über einen Verbindungsbereich 27 miteinander verbunden sind. Der Verbindungsbereich 27 begrenzt den Boden 38 des Griffmauls 16. Zwischen den beiden freien Enden 36 und 37 der Schenkel 25 und 26 des Überzugs 20 ist der Haken 8 offen ausgebildet.

Die Mittelachse des Anschlussstutzens 18 fällt mit der Bewegungsachse 9 der Rüttelstange 6 zusammen. Die Mittelachse des Anschlussstutzens 18 bzw. die Bewegungsachse 9 besitzen zum Boden 38 des Griffmauls 16 einen senkrecht zur Bewegungsachse 9 gemessenen Abstand f. Der Abstand g der Bewegungsachse 9 zu den freien Enden 36 und 37 des Überzugs 20 ist größer als der Abstand f. Der Anschlussstutzen 18 ist demnach näher am Boden 38 als an den freien Enden 36 und 37 angeordnet.

In Fig. 3 ist der Grundkörper 13 des Hakens 8 gezeigt. Der Grundkörper 13 besitzt eine Grundfläche 14, die U-förmig ausgebildet ist. An der dem Griffmaul 16 zugewandten Innenkante der Grundfläche 14 ist ein Quersteg 15 an der Grundfläche 14 angeordnet. Die Grundfläche 14 und der Quersteg 15 bilden einen ersten Schenkel 22 und einen zweiten Schenkel 23 des Grundkörpers 13 sowie einen Verbindungsbereich 24, der die beiden Schenkel 22 und 23 miteinander verbindet. Im Verbindungsbereich 24 sind zwischen Quersteg 15 und Grundfläche 14 zwei Versteifungsstreben 17 auf jeder Seite der Grundfläche 14 vorgesehen. Die an der in Fig. 3 hinten liegenden Seite der Grundfläche 14 angeordneten Versteifungsstreben 17 sind dabei in Fig. 3 nicht gezeigt.

Der Anschlussstutzen 18 ist zylindrisch ausgebildet und an einem Anschlussbereich 47 mit dem ersten Schenkel 22 des Grundkörpers 13 verbunden. Im Anschlussbereich 47 wird der Anschlussstutzen 18 flacher. Die Grundfläche 14 besitzt ihre maximale senkrecht zum Quersteg 15 gemessene Breite c im Verbindungsbereich 24. Im Bereich der Schenkel 22 und 23 besitzt die Grundfläche 14 eine senkrecht zum Quersteg 15 gemessene Breite b, die vom Verbindungsabschnitt 24 zu den freien Enden 43 und 44 der Schenkel 22 und 23 abnimmt. Im Bereich der freien Ende 43 und 44 besitzt die Grundfläche 14 die geringste Breite b.

Der Quersteg 15 bildet mit der Grundfläche 14 einen T-förmigen Querschnitt des Grundkörpers 13. Der Quersteg 15 besitzt eine Dicke d, die erheblich größer als die parallel zur Ebene der Grundfläche 14 gemessene Breite e des Querstegs 15 ist. Die Dicke d beträgt vorteilhaft etwa das zweifache bis etwa das zehnfache der Breite e. Die Dicke d ist im Ausführungsbeispiel kleiner als die maximale Breite c der Grundfläche 14. Die Dicke d beträgt vorteilhaft etwa 70 % bis etwa 100 % der maximalen Breite c der Grundfläche 14.

Der Quersteg 15 ist U-förmig an der Grundfläche 14 angeordnet. Im Bereich der beiden Schenkel 22 und 23 bildet der Quersteg 15 Führungsleisten 19, die gerade und parallel zueinander verlaufen. Die Führungsleisten 19 besitzen eine Länge 1, die mindestens 50 % einer in Fig. 2 gezeigten Tiefe t des Griffmauls 16 beträgt. Die Tiefe t des Griffmauls 16 ist dabei von den freien Ende 36, 37 des Überzugs 20 bis zum Boden 38 gemessen. Vorteilhaft beträgt die Länge 1 der Führungsleiste 19 mehr als 60 % der Tiefe t des Griffmauls 16. Die Grundfläche 14 besitzt eine Breite s, die etwa der Breite e des Querstegs 15 entsprechen kann. Die Breite s der Grundfläche 14 ist dabei im Bereich der freien Enden 43 und 44 kleiner als im Verbindungsbereich 24.

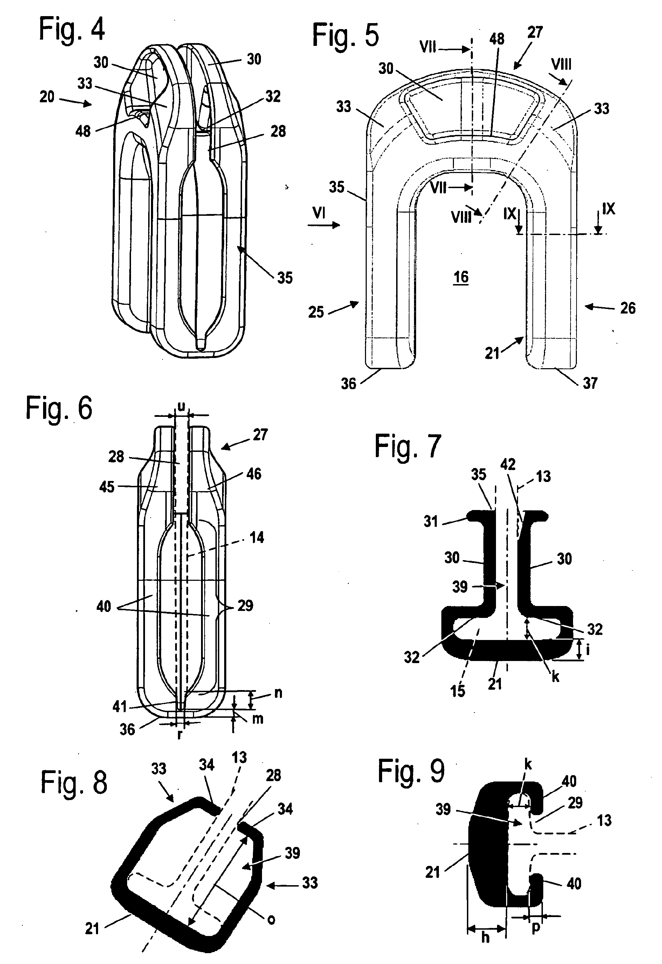

Die Fig. 4 bis 9 zeigen den Überzug 20 in dem Zustand, in dem sich der Überzug 20 am Grundkörper 13 befindet. Der Grundkörper 13 ist dabei in den Fig. 4 und 5 nicht gezeigt. Wie die Figuren zeigen, besitzt der Überzug 20 an seiner dem Griffmaul 16 abgewandten Außenseite 35 einen umlaufenden Schlitz 28. Der Schlitz 28 erstreckt sich vom ersten freien Ende 36 bis zum zweiten freien Ende 37 der Schenkel 25 und 26 über die gesamte Länge der Außenseite 35. Wie Fig. 6 zeigt, ist der Schlitz 28 benachbart zu den freien Enden 36 und 37 schmaler ausgebildet. Der Schlitz 28 bildet in diesem Bereich eine Endnut 41, die eine Breite r besitzt, die von etwa 2 mm bis etwa 8 mm betragen kann. Vorteilhaft beträgt die Breite r etwa 5 mm.

Die in Fig. 6 gezeigte Breite r der Endnut 41 entspricht vorteilhaft der in Fig. 3 gezeigten Breite s der Grundfläche 14 benachbart zu den freien Enden 43 und 44. Dadurch ist der Grundkörper 13 in diesem Bereich von dem Überzug 20 eng umschlossen.

Die Länge n der Endnut 41 beträgt vorteilhaft zwischen etwa 10 mm bis etwa 20 mm. Im Ausführungsbeispiel ist eine Länge n von etwa 15 mm vorgesehen. Die schmale Endnut 41 führt dazu, dass der Überzug 20 den Grundkörper 13 im Bereich der Endnut 41 eng umschließt. Die Endnut 41 verhindert ein weites Aufdehnen des Überzugs 20 in diesem Bereich. Der Überzug 20 ist in dem benachbart zu den freien Enden 36 und 37 liegenden Abschnitt so ausgelegt, dass der Überzug 20 in diesem Bereich reibschlüssig an dem Grundkörper 13 gehalten ist.

An die Endnut 41 schließt sich ein verbreiterter Abschnitt 29 des Schlitzes 28 an. Der verbreitete Abschnitt 29 erstreckt sich bis zum Verbindungsabschnitt 27. Es kann jedoch auch vorgesehen sein, den verbreiterten Abschnitt 29 kürzer auszubilden. Der verbreiterte Abschnitt 29 des Schlitzes 28 ist von Klemmrändern 40 begrenzt. Wie die Schnittdarstellung in Fig. 9 zeigt, umgreifen die Klemmränder 40 den Quersteg 15 des Grundkörpers 13 eng. Die Klemmränder 40 begrenzen eine in dem Überzug 20 ausgebildete Aufnahme 39 für den Grundkörper 13. Die Klemmränder 40 besitzen eine Dicke p, die vorteilhaft etwa 1 mm bis etwa 3 mm beträgt. Dadurch ergibt sich eine ausreichende Steifigkeit. Gleichzeitig ist der Überzug 20 ausreichend elastisch, um leicht an dem Grundkörper 13 montiert werden zu können.

Wie Fig. 5 zeigt, ist an der Innenseite des Überzugs 20, also an dem das Griffmaul 16 begrenzenden Bereich eine Greiffläche 21 ausgebildet. Die Greiffläche 21 ist im Bereich der Schenkel 25 und 26 dick ausgebildet. Wie Fig. 9 zeigt, beträgt die Dicke h des Überzugs 20 zwischen der Greiffläche 21 und der Aufnahme 39 etwa 5 mm bis etwa 15 mm. Dadurch ist eine dicke Verschleißfläche gebildet. Wie Fig. 9 auch zeigt, entspricht die Breite k der Aufnahme 39 im Bereich der Schenkel 25 und 26 etwa der Breite e des Querstegs 15 (Fig. 3). Dadurch ist der Quersteg 15 von dem Überzug 20 eng umschlossen.

Im Verbindungsbereich 27 ist der Überzug 20 am Grundkörper 13 formschlüssig gehalten. Hierzu besitzt der Überzug 20 die in Fig. 4 und Fig. 7 gezeigten Absätze 32. Wie Fig. 6 zeigt, teilt der Schlitz 28 den Überzug 20 im Verbindungsbereich 27 in zwei Abschnitte 45 und 46. Diese beiden Abschnitte 45 und 46 liegen bei am Grundkörper 13 montiertem Überzug 20 an gegenüberliegenden Seiten der Grundfläche 14 an. Die Absätze 32 hintergreifen den Quersteg 15. Wie Fig. 7 zeigt, entspricht der Querschnitt der Aufnahme 39 im Bereich der Absätze 32 dem Querschnitt des Grundkörpers 13. Der Grundkörper 13 ist von dem Überzug 20 in diesem Bereich eng umschlossen. Im Verbindungsbereich 27 bildet jeder Abschnitt 45, 46 eine Greiflasche 30, an der der Benutzer die beiden Abschnitte 45 und 46 greifen und auseinanderziehen kann, um die Absätze 32 außer Eingriff mit dem Quersteg 15 zu bringen und so den Überzug 20 zu demontieren. Die Greiflaschen 30 werden von einem nach außen stehenden Rand 31 begrenzt, der die Stabilität erhöht. Im Ausführungsbeispiel sind die Greiflaschen 30 mittig zwischen den beiden Schenkeln 25 und 26 angeordnet. Die Absätze 32 erstrecken sich am gesamten unteren Rand 48 der Greiflaschen 30.

Beidseitig jeder Greiflasche 30 ist ein Versteifungsabschnitt 33 angeordnet. Fig. 8 zeigt einen Schnitt durch einen Versteifungsabschnitt 33. In diesem Bereich besitzt die Aufnahme 39 eine senkrecht zum Quersteg 15 gemessene Breite o, die erheblich größer als die Breite e des Querstegs 15 des Grundkörpers 13 ist. Die Versteifungsabschnitte 33 sind von einem Rand 34 begrenzt, der an den Rand 31 der Greiflaschen 30 anschließt. Im Versteifungsabschnitt 33 liegt nur der Rand 34 an der Grundfläche 14 des Grundkörpers 13 an. Der zwischen Rand 34 und der Greiffläche 21 liegende Bereich des Überzugs 20 besitzt einen Abstand zur Grundfläche 14. Dadurch ist in diesem Bereich die Steifigkeit des Überzugs 20 gegen eine Biegung des Überzugs 20 nach außen vergrößert.

Im Bereich des Bodens 38 besitzt der Überzug 20 zwischen Greiffläche 21 und Aufnahme 39 eine Dicke i, die etwa 1 mm bis etwa 7 mm beträgt. In diesem Bereich liegt ein gegriffener Ast an dem Überzug 20 an. An den freien Enden 36 und 37 besitzt der Überzug 20 die in Fig. 6 gezeigte Dicke m, die vorteilhaft etwa 2 mm beträgt.

Wie Fig. 6 auch zeigt, liegen die beiden Abschnitte 45 und 46 an dem Grundkörper 13 an. In an dem Grundkörper 13 montierter Stellung besitzen die beiden Abschnitte 45 und 46 einen Abstand u zueinander, der der Breite s der Grundfläche 14 im Verbindungsbereich 24 entspricht.

Wie Fig. 7 zeigt, kann zur Vereinfachung der Montage an den Greiflaschen 30 eine Montageschräge 42 vorgesehen sein. In Fig. 7 ist die Montageschräge 42 schematisch nur an einer Greiflasche 30 gezeigt, vorteilhaft wird die Montageschräge 42 jedoch auch an der gegenüberliegenden Greiflasche 30 angebracht.

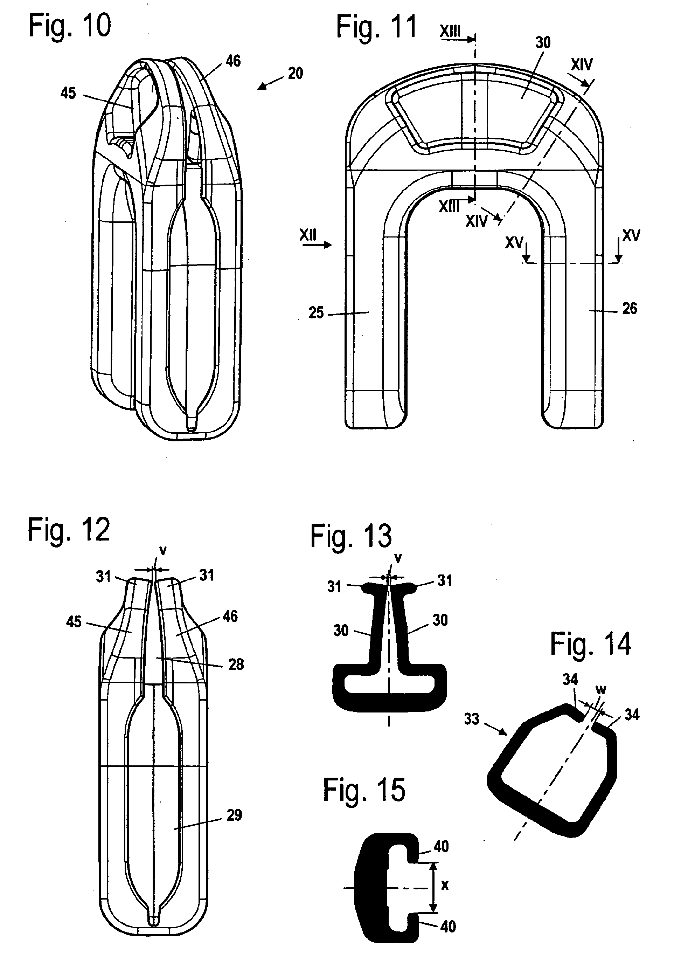

Die Fig. 10 bis 15 zeigen den Überzug 20 in nicht montiertem Zustand. Wie Fig. 10 zeigt, sind die beiden Abschnitte 45 und 46 aufeinander zu geneigt. Diese beiden Abschnitte 45, 46 sind zueinander vorgespannt. Wie Fig. 12 und Fig. 13 zeigen, berühren sich die Abschnitte 45 und 46 im Bereich des Rands 31 annährend. Die beiden Abschnitte 45 und 46 besitzen zueinander einen sehr geringen Abstand v. Wie Fig. 14 zeigt, ist auch der Abstand w zwischen den Rändern 34 im Versteifungsabschnitt 33 verringert. Der Abstand w ist kleiner als die Dicke s des Grundkörpers 13 in diesem Bereich. Wie Fig. 15 zeigt, kann auch im Bereich der Schenkel 25 und 26 eine geringe Vorspannung gegeben sein, so dass auch die Breite x des verbreiterten Abschnitts 29 verringert ist. Bei der Montage werden die beiden Abschnitte 45 und 46 aufgeweitet und liegen nach der Montage aufgrund ihrer Vorspannung eng an der Grundfläche 14 an. Dadurch ergibt sich eine sichere Fixierung des Überzugs 20 an dem Grundkörper 13.

Wie die Figuren zeigen, ist der Überzug 20 spiegelsymmetrisch ausgebildet, und zwar sowohl zu einer den Schlitz 28 und die Grundfläche 14 enthaltenden Ebene als auch zu einer Ebene, die senkrecht zur Grundfläche 14 steht und die das Griffmaul 16 mittig teilt. Dadurch kann der Haken 8 im Betrieb gewendet werden, wenn einer der Schenkel 25, 26 verschlissen ist.

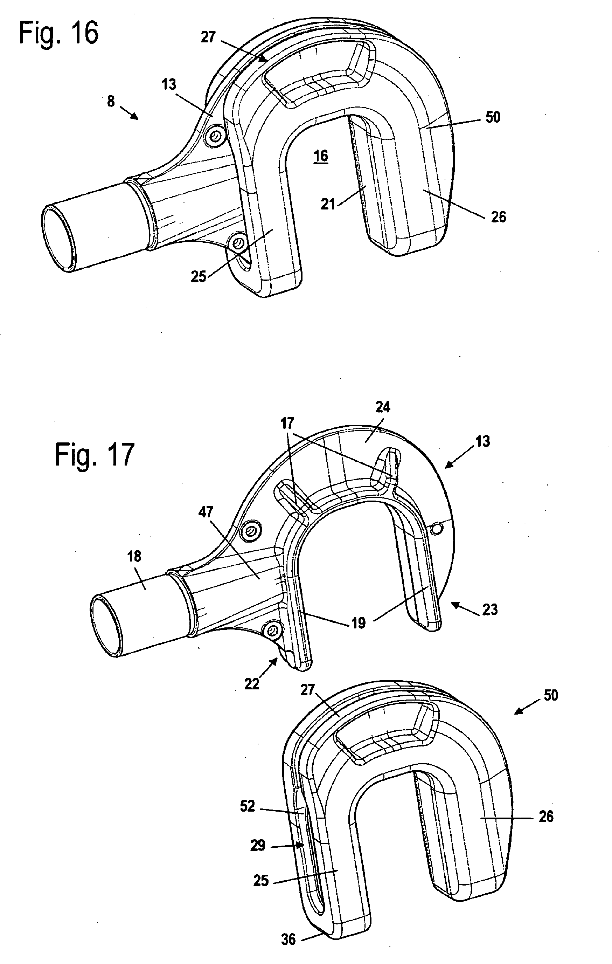

Die Figuren 16 bis 26 zeigen ein Ausführungsbeispiel eines Überzugs 50, der an einem Grundkörper 13 angeordnet ist und mit diesem einen Haken 8 bildet. Der Überzug 50 entspricht dabei im Wesentlichen, bis auf die im Folgenden erläuterten Unterschiede, dem Überzug 20. Gleiche Bezugszeichen in den Figuren bezeichnen dabei einander entsprechende Elemente. Der Überzug 50 besitzt zwei Schenkel 25, 26, die über einen Verbindungsbereich 27 miteinander verbunden sind. Die beiden Schenkel 25 und 26 sind auf parallel zueinander ausgebildete Führungsleisten 19 des Grundkörpers 13 aufgeschoben. Der Überzug 50 besitzt einen Schlitz 52, der im Bereich des Anschlussbereichs 47 des Grundkörpers 13 verbreitert ausgebildet ist.

Der Schlitz 52 erstreckt sich vom freien Ende 36 des Schenkels 25 über den gesamten Schenkel 25 und über den gesamten Verbindungsbereich 27 bis zum zweiten Schenkel 26.

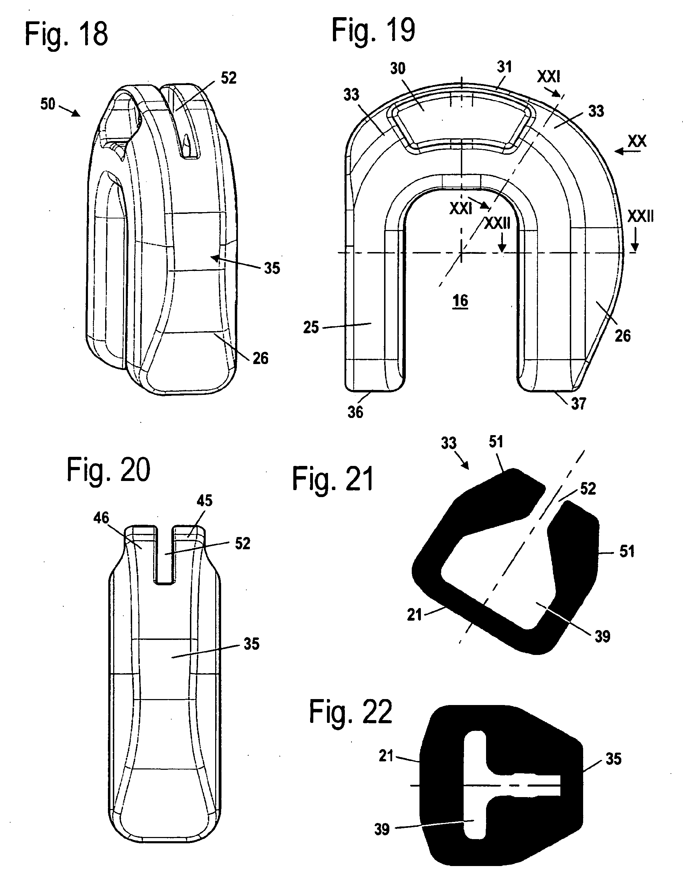

Wie Fig. 18 zeigt, endet der Schlitz 52 am zweiten Schenkel 26. Der zweite Schenkel 26 ist zur Außenseite 35 des Überzugs 50 geschlossen ausgebildet. Wie insbesondere Fig. 19 zeigt, entspricht die Gestalt des zweiten Schenkels 26 des Überzugs 50 etwa der Gestalt des zweiten Schenkels 23 des Grundkörpers 13. Wie die Schnittdarstellung in Fig. 22 zeigt, besitzt der Überzug 50 im Bereich des zweiten Schenkels 26 eine Aufnahme 39, deren Querschnitt T-förmig, entsprechend der T-förmigen Gestalt des zweiten Schenkels 23 des Grundkörpers 13 des Hakens 8 ausgebildet ist. Der Überzug 50 liegt mit seinem zweiten Schenkel 26 vorteilhaft am gesamten Umfang des zweiten Schenkels 23 annähernd dicht an. Ein geringes Spiel, also ein Übermaß der Aufnahme 39 kann vorgesehen sein, um die Montage des Überzugs 50 am Grundkörper 13 zu erleichtern.

Wie Fig. 21 zeigt, sind die beidseitig der Greiflasche 30 vorgesehenen Versteifungsabschnitte 33 mit beidseitig des Schlitzes 52 vorgesehenen Verdickungen 51 ausgeführt. Dadurch ist die Steifigkeit des Überzugs 50 im Versteifungsabschnitt 33 erhöht.

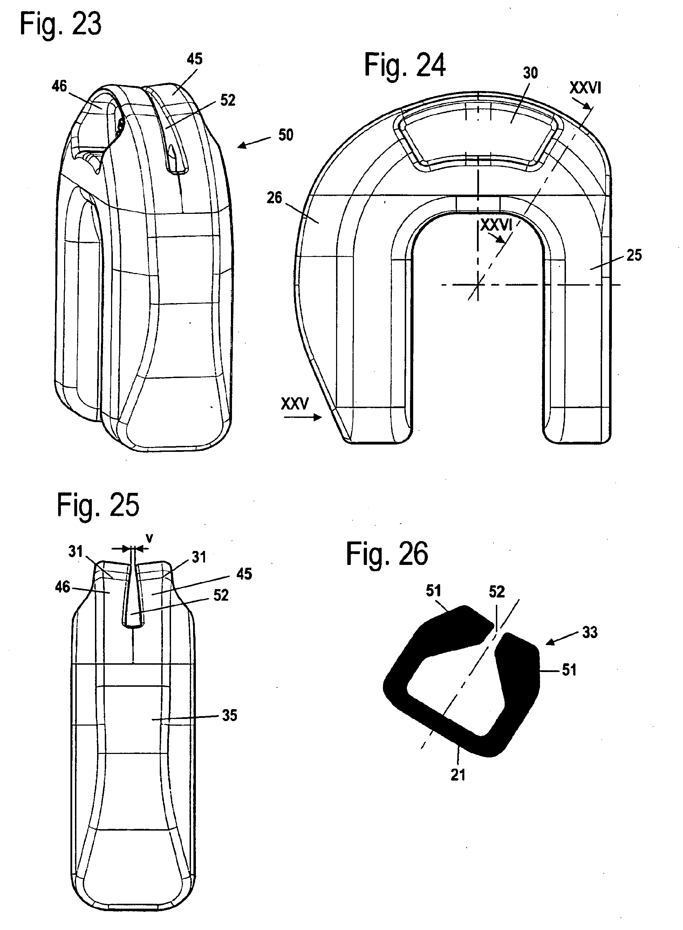

Wie die Figuren 23 bis 26 zeigen, ragen die beiden beidseitig des Schlitzes 52 vorgesehenen Abschnitte 45 und 46 des Verbindungsbereichs 27 in nicht an dem Grundkörper 13 montiertem Zustand aufeinander zu und berühren sich annähernd. Wie Fig. 25 zeigt, ist zwischen den beiden Abschnitten 45 und 46 ein geringer Abstand v gebildet. Die beiden Abschnitte 45 und 46 sind aufeinander zu vorgespannt. Wie die Schnittdarstellung in Fig. 26 zeigt, ist der Schlitz 52 auch am Versteifungsabschnitt 33 leicht verengt gegenüber dem am Grundkörper 13 montierten Zustand.

Wie Fig. 16 zeigt, ragt der Überzug 50 in seinem Verbindungsbereich 27 bis in den Bereich des äußeren Rands des Grundkörpers 13, so dass der Überzug 50 und der Grundkörper 13 im Bereich zwischen den beiden Schenkeln des Hakens 8 etwa bündig miteinander abschließen. Der Grundkörper 13 ragt dabei durch den Schlitz 52 bis an den Außenumfang des Hakens 8.

Der Überzug 50 ist spiegelsymmetrisch zu einer Ebene ausgebildet, die die beiden Schenkel 25, 26 mittig schneidet und die den Schlitz 52 enthält. Zu einer senkrecht auf die Grundfläche 14 des Grundkörpers 13 stehenden Ebene ist der Überzug 50 jedoch nicht spiegelsymmetrisch ausgebildet. Die weitere Gestaltung des Überzugs 50 entspricht im Wesentlichen der des Überzugs 20. Auch die Abmessungen des Griffmauls 16 und der Aufnahme 39 sind im Wesentlichen einander entsprechend ausgeführt. Auch bei dem Überzug 50 kann im Bereich der Greiflaschen 30 eine Montageschräge 42 vorgesehen sein, die der in Fig. 7 gezeigten Montageschräge 42 entspricht.

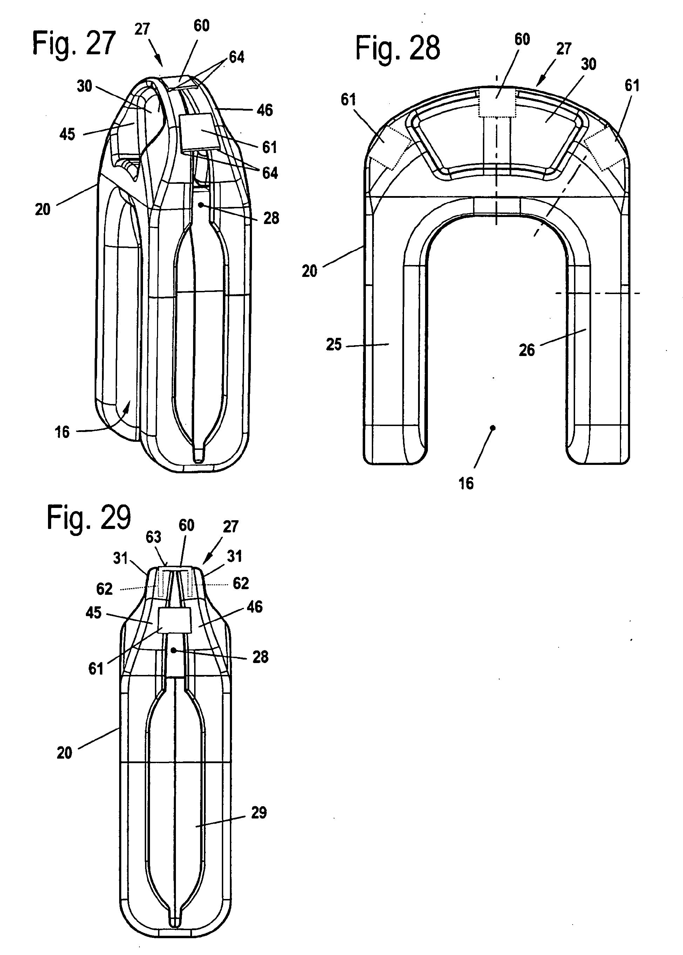

Die erfindungsgemäße Gestaltung stellt einen sicheren Halt des Überzugs 20 auf dem Grundkörper 13 (Fig. 3) eines Hakens sicher. Es kann vorteilhaft sein, den Überzug auf dem Grundkörper des Hakens durch ergänzende Maßnahmen zu sichern. Eine derartige Maßnahme sind die in den Figuren 27 bis 29 dargestellten Sicherungsklammern 60, 61.

Wie Fig. 28 zeigt, können eine oder mehrere Sicherungsklammern 60, 61 vorgesehen werden. Grundsätzlich wäre eine Sicherungsklammer 60 ausreichend, die den Schlitz 28 zwischen den beiden Überzugabschnitten 45 und 46 übergreift. Die Sicherungsklammer 60 ist vorteilhaft auf der dem Griffmaul 16 gegenüberliegenden Rückseite des Überzugs 20 vorgesehen. Wie insbesondere Fig. 29 zeigt, greifen die Schenkel 62 der Sicherungsklammer 60 in die Überzugabschnitte 45 und 46 ein, wobei die Schenkel 62 im Wesentlichen in den Abschnitten 45 und 46 versenkt liegen. Lediglich die Stegplatte 63 der Sicherungsklammer 60 ist - wie auch die Figuren 27 und 29 zeigen - sichtbar und bildet eine Brücke über den Schlitz 28 zwischen den beiden Überzugabschnitten 45 und 46. Durch die Sicherungsklammer 60 sind die Überzugsabschnitte 45 und 46 fest miteinander verbunden, so dass ein Öffnen des Überzugs ohne Entfernen der Sicherungsklammer 60 nicht möglich ist.

Die Schenkel 62 der Sicherungsklammer 60 greifen in Schlitze 64 ein, die im Material der Greiflaschen bzw. der Überzugabschnitte 45 und 46 ausgebildet sind. Zweckmäßig sind die Aufnahmeschlitze 64 mit Untermaß zur Dicke der Schenkel 62 der Sicherungsklammer 60 ausgebildet, so dass nach Eindrücken der Sicherungsklammer 60 in die Schlitze 64 diese kraft- und reibschlüssig in den Überzugabschnitten 45 und 46 gehalten ist. Der Steg 63 der Sicherungsklammer 60 bildet dabei im Wesentlichen eine Ebene mit der Außenkontur des Überzugs 20. Vorteilhaft ist die Sicherungsklammer 60 etwas gegenüber der Oberfläche des Überzugs 20 um insbesondere ca. 0,5 mm bis 10 mm vertieft. Dadurch kann ein Kontakt der Sicherungsklammer 60 mit Ästen vermieden werden.

Zur weiteren Sicherung können im Fußbereich der Schenkel 25 und 26 des Überzugs ergänzende Sicherungsklammern 61 angeordnet werden, die in gleicher Weise ausgebildet und angeordnet sind, wie die vorstehend beschriebene Sicherungsklammer 60. Auch die Sicherungsklammern 61 greifen mit ihren Schenkeln in Schlitze 64 im Material des Überzugs 20 ein und werden in diesen Schlitzen kraftschlüssig gehalten. Auch die Stegplatte der seitlichen Sicherungsklammern 61 liegt in einer Ebene mit der Kontur des Überzugs 20, vorzugsweise etwas vertieft zur Kontur.

Es kann vorteilhaft sein, die Stege 62 leicht winklig nach innen anzustellen, so dass der Klammereffekt einer Sicherungsklammer 60, 61 unterstützt ist. Dies gewährleistet einen festen Halt am Überzug, so dass durch die Sicherungsklammern 60 und 61 der Schlitz 28 im Überzug 20 fest überbrückt ist und die Greiflaschen 30 zueinander fixiert sind.

## Patentansprüche

1. Haken für das Ende (12) einer Rüttelstange (6) eines Erntegeräts (1), wobei der Haken (8) einen U-förmigen Grundkörper (13) mit zwei Schenkeln (22, 23) und einem Verbindungsbereich (24) zwischen den Schenkeln (22, 23) sowie einen lösbar an dem Grundkörper (13) gehaltenen, U-förmigen Überzug (20, 50) umfasst, der ein Griffmaul (16) begrenzt und der einteilig ausgebildet ist, wobei der Grundkörper (13) des Hakens (8) eine Grundfläche (14) und einen quer zur Grundfläche (14) stehenden Quersteg (15) aufweist, und wobei der Überzug (20, 50) auf dem Haken (8) formschlüssig und/oder reibschlüssig gehalten ist, **dadurch gekennzeichnet, dass** der Quersteg (15) an den Schenkeln (22, 23) des Grundkörpers (13) parallele Führungsleisten (19) bildet, wobei auf jede Führungsleiste (19) ein Schenkel (25, 26) des Überzugs (20, 50) aufgeschoben ist, und wobei sich die Führungsleisten (19) ausgehend von den freien Enden (36, 37) der Schenkel (25, 26) des Überzugs (20, 50) über mindestens 50 % der parallel zu den Führungsleisten (19) gemessenen Tiefe (t) des Griffmauls (16) erstrecken.

2. Haken nach Anspruch 1,
**dadurch gekennzeichnet, dass** der Überzug (20, 50) im Verbindungsbereich (24) des Grundkörpers (13) formschlüssig an dem Grundkörper (13) gehalten ist, wobei der Überzug (20, 50) insbesondere mindestens einen Absatz (32) aufweist, der den Quersteg (15) im Verbindungsbereich (24) hintergreift und wobei der Überzug (20, 50) den Quersteg (15) im Verbindungsbereich (24) des Grundkörpers (13) vorteilhaft vollständig umschließt.

3. Haken nach Anspruch 2,
**dadurch gekennzeichnet, dass** in dem Überzug (20, 50) eine Aufnahme (39) für den Grundkörper (13) gebildet ist, deren Breite (k) im Bereich der Schenkel (25, 26) des Überzugs (20, 50) und im Bereich des Absatzes (32) etwa der Breite (e) des Querstegs 15 entspricht.

4. Haken nach einem der Ansprüche 1 bis 3,
**dadurch gekennzeichnet, dass** der Überzug (20, 50) im Bereich der freien Enden (36, 37) seiner Schenkel (25, 26) reibschlüssig an dem Grundkörper (13) gehalten ist.

5. Haken nach einem der Ansprüche 1 bis 4,
**dadurch gekennzeichnet, dass** der Überzug (20, 50) an seiner dem Griffmaul (16) abgewandten Außenseite (35) einen Schlitz (28, 52) aufweist.

6. Haken nach Anspruch 5,
**dadurch gekennzeichnet, dass** sich der Schlitz (28) über die gesamte Außenseite (35) des Überzugs (20) vom freien Ende (36) des ersten Schenkels (25) bis zum freien Ende (37) des zweiten Schenkels (26) erstreckt, wobei der Schlitz (20, 50) insbesondere benachbart zu mindestens einem freien Ende (36, 37) eines Schenkels (25, 26) des Überzugs (20, 50) eine Breite (r) aufweist, die etwa der Breite (s) der Grundfläche (14) des Grundkörpers (13) in diesem Bereich entspricht und wobei die Grundfläche (14) vorteilhaft über die gesamte Länge des Schlitzes (28) durch den Schlitz (28, 52) aus dem Überzug (20, 50) ragt.

7. Haken nach Anspruch 5,
**dadurch gekennzeichnet, dass** sich der Schlitz (52) an der Außenseite (35) des Überzugs (50) vom freien Ende (36) eines ersten Schenkels (25) bis mindestens zum Verbindungsbereich (27) erstreckt und dass ein zweiter Schenkel (26) des Überzugs (50) an der Außenseite (35) des Überzugs (50) geschlossen ausgebildet ist.

8. Haken nach einem der Ansprüche 5 bis 7,
**dadurch gekennzeichnet, dass** der Schlitz (28, 52) im Bereich eines Anschlussstutzens (18) für die Rüttelstange (6) verbreitert ausgebildet ist.

9. Haken nach einem der Ansprüche 1 bis 8,
**dadurch gekennzeichnet, dass** der senkrecht zur Bewegungsachse (9) der Rüttelstange (6) gemessene Abstand (f) der Mittelachse eines Anschlussstutzens (18) für die Rüttelstange (6) zu dem im Verbindungsbereich (24) angeordneten Boden (38) des Griffmauls (16) kleiner als der Abstand (g) zu den freien Enden (36, 37) der Schenkel (25, 26) des Überzugs (20, 50) ist.

10. Haken nach einem der Ansprüche 1 bis 9,
**dadurch gekennzeichnet, dass** die Grundfläche (14) des Hakens (8) im Verbindungsbereich (24) breiter ausgebildet ist als im Bereich der Schenkel (22, 23), dass die senkrecht zum Quersteg (15) gemessene Breite (d) der Grundfläche (14) im Bereich der Schenkel (22, 23) von den freien Enden (43, 44) der Schenkel (22, 23) zum Verbindungsbereich (24) insbesondere zunimmt und dass der Quersteg (15) eine senkrecht zur Ebene der Grundfläche (14) gemessene Dicke (d) aufweist, die vorteilhaft größer als die parallel zur Grundfläche (14) gemessene Breite (e) des Querstegs (15) ist, wobei die Dicke (d) des Querstegs (15) insbesondere etwa das zweifache bis zehnfache der Breite (e) beträgt und wobei die Dicke (d) des Querstegs (15) vorteilhaft etwa 70 % bis 100 % der maximalen Breite (c) der Grundfläche (14) im Verbindungsbereich (24) entspricht.

11. Haken nach einem der Ansprüche 1 bis 10,
**dadurch gekennzeichnet, dass** der Haken (8) aus Leichtmetall, insbesondere aus Magnesium besteht.

12. Überzug zur formschlüssigen und/oder kraftschlüssigen Fixierung an einem am Ende (12) einer Rüttelstange (6) eines Erntegeräts (1) angeordneten Haken (8), wobei der Überzug (20, 50) einteilig und U-förmig ausgebildet ist und zwei Schenkel (25, 26) und einen Verbindungsbereich (27) zwischen den Schenkeln (25, 26) aufweist, wobei in dem Überzug (20, 50) eine Aufnahme (39) für den Haken (8) ausgebildet ist und wobei der Überzug (20, 50) ein Griffmaul (16) begrenzt,
**dadurch gekennzeichnet, dass** die Schenkel (25, 26) des Überzugs (20, 50) ausgehend von den freien Enden (36, 37) der Schenkel (25, 26) über mindestens 50 % der Tiefe (t) des Griffmauls (16) parallel zueinander verlaufen.

13. Überzug nach Anspruch 12,
**dadurch gekennzeichnet, dass** der Überzug (20, 50) im Verbindungsbereich (27) mindestens einen Absatz (32) zur formschlüssigen Fixierung des Überzugs (20, 50) auf dem Haken (8) aufweist und dass der Überzug (20, 50) seitlich des Absatzes (32) insbesondere mindestens einen Versteifungsabschnitt (33) aufweist.

14. Überzug nach Anspruch 12 oder 13,
**dadurch gekennzeichnet, dass** der Überzug (20, 50) im Verbindungsbereich (27) mindestens eine Montageschräge (42) aufweist.

15. Überzug nach einem der Ansprüche 12 bis 14,
**dadurch gekennzeichnet, dass** der Überzug (20, 50) an seiner dem Griffmaul (16) abgewandten Außenseite (35) einen Schlitz (28, 52) aufweist.

16. Überzug nach Anspruch 15,
**dadurch gekennzeichnet, dass** der Schlitz (28) sich über die gesamte Außenseite (35) des Überzugs (20) vom freien Ende (36) des ersten Schenkels (25) zum freien Ende (37) des zweiten Schenkels (25) erstreckt.

17. Überzug nach Anspruch 15,
**dadurch gekennzeichnet, dass** sich der Schlitz (52) an der Außenseite (35) des Überzugs (50) vom freien Ende (36) eines ersten Schenkels (25) bis mindestens zum Verbindungsbereich (27) erstreckt und dass ein zweiter Schenkel (26) des Überzugs (50) an der Außenseite (35) des Überzugs (50) geschlossen ausgebildet ist.

18. Überzug nach Anspruch 16 oder 17,
**dadurch gekennzeichnet, dass** der Schlitz (28, 52) in einem mittleren Bereich mindestens eines Schenkels (25, 26) verbreitert ausgebildet ist und dass insbesondere die den Schlitz (28, 52) im Verbindungsbereich (27) begrenzenden Abschnitte des Überzugs (20, 50) aufeinander zu vorgespannt sind, wobei der Überzug (20) vorteilhaft spiegelsymmetrisch ausgebildet ist und wobei die Dicke (h) des Überzugs (20, 50) zwischen der Aufnahme (39) und dem Griffmaul (16) im Bereich der Schenkel (25, 26) insbesondere etwa 5 mm bis etwa 15 mmm beträgt.

19. Überzug nach einem der Ansprüche 12 bis 18,
**dadurch gekennzeichnet, dass** der Überzug (20, 50) aus Naturkautschuk besteht, der insbesondere eine Härte von etwa 60 bis etwa 80 Shore aufweist.

20. Überzug nach einem der Ansprüche 12 bis 19,
**dadurch gekennzeichnet, dass** im Verbindungsbereich (27) eine Sicherungsklammer (60, 61) angeordnet ist, die einen Schlitz (28, 52) des Verbindungsbereichs (27) überbrückt.

21. Überzug nach Anspruch 20,
**dadurch gekennzeichnet, dass** die Sicherungsklammer (60, 61) gegenüber der Oberfläche des Überzugs (20) vertieft liegt, vorzugsweise um etwa 0,5 mm bis 10 mm vertieft liegt.

## Claims

1. Hook for the end (12) of a shaking rod (6) of a harvesting device (1), such that the hook (8) has a U-shaped main body (13) with two arms (22, 23) and a connecting section (24) between the arms (22, 23) and a removable, U-shaped covering (20, 50) held on the main body (13), which delimits a gripping jaw (16) and is formed integrally, such that the main body (13) of the hook (8) has a basic surface (14) and a transverse web (15) which extends transversely to the basic surface (14), and such that the covering (20, 50) is held on the hook (8) with positive interlock and/or by friction,
**characterised in that** the transverse web (15) forms parallel guide strips (19) along the arms (22, 23) of the main body (13), and an arm (25, 26) of the covering (20, 50) is pushed onto each guide strip (19), and starting from the free ends (36, 37) of the arms (25, 26) of the covering (20, 50) the guide strips (19) extend over at least 50% of the depth (t) of the gripping jaw (16) measured parallel to the said guide strips (19).

2. Hook according to claim 1,
**characterised in that** in the connecting section (24) of the main body (13) the covering (20, 50) is held with positive interlock onto the main body (13), the covering (20, 50) having in particular at least one offset (32) which engages behind the transverse web (15) in the connecting section (24), and such that the covering (20, 50) advantageously completely encloses the transverse web (15) in the area of the connecting section (24) of the main body (13).

3. Hook according to claim 2,
**characterised in that** the covering (20, 50) forms a holding space (39) for the main body (13), whose width (k) in the area of the arms (25, 26) of the covering (0, 50) and in the area of the offset (32) corresponds approximately to the width (e) of the transverse web (15).

4. Hook according to any of claims 1 to 3,
**characterised in that** in the area of the free ends (36, 37) of its arms (25, 26) the covering (20, 50) is held onto the main body (13) by friction.

5. Hook according to any of claims 1 to 4,
**characterised in that** on its outer side (35) facing away from the gripping jaw (16) the covering (20, 50) has a slit (28, 52).

6. Hook according to claim 5,
**characterised in that** the slit (28) extends over the entire outer side (35) of the covering (20) from the free end (36) of the first arm (25) to the free end (37) of the second arm (26), and in particular close to at least one free end (36, 37) of one arm (25, 26) of the covering (20, 50) the slit (28, 52) has a width (r) which corresponds approximately to the width (s) of the basic surface (14) of the main body (13) in this area, and the basic surface (14) advantageously projects through the slit (28, 52) out of the covering (20, 50) along the full length of the slit (28, 52).

7. Hook according to claim 5,
**characterised in that** the slit (52) on the outside (35) of the covering (50) extends from the free end (36) of a first arm (25) at least as far as the connecting section (27), and a second arm (26) of the covering (50) is closed on the outside (35) of the covering (50).

8. Hook according to any of claims 5 to 7,
**characterised in that** the slit (28, 52) is made wider in the area of a connecting socket (18) for the shaking rod (6).

9. Hook according to any of claims 1 to 8,
**characterised in that** the distance (f) of the central axis of the said connecting socket (18) for the shaking rod (6) to the bottom (38) of the gripping jaw (16) in the area of the connecting section (24), measured perpendicularly to the movement axis (9) of the shaking rod (6), is smaller than the distance (g) to the free ends (36, 37) of the arms (25, 26) of the covering (20, 50).

10. Hook according to any of claims 1 to 9,
**characterised in that** the basic surface (14) of the hook (8) in the area of the connecting section (24) is wider than in the area of the arms (22, 23), the width (d) of the basic surface (14), measured perpendicularly to the transverse web (15), in particular increasing from the free ends (43, 44) of the arms (22, 23) towards the connecting section (24), and the transverse web (15) has a thickness (d), measured parallel to the basic surface (14), such that the said thickness (d) of the transverse web (15) is in particular approximately twice to ten times the width (e) and such that the thickness (d) of the transverse web (15) advantageously corresponds approximately to 70% to 100% of the maximum width (c) of the basic surface (14) in the connecting area (14).

11. Hook according to any of claims 1 to 10,
**characterised in that** the hook (8) is made from a light metal, in particular magnesium.

12. Covering for positively interlocked or frictional fixing onto a hook (8) arranged at the end (12) of a shaking rod (6) of a harvesting device (1), such that the covering (20, 50) is made integrally in a U-shape and has two arms (25, 26), such that in the covering (20, 50) is formed a holding space (39) for the said hook (8), and such that the covering (20, 50) delimits a gripping jaw (16),
**characterised in that** starting from the free ends (36, 37) of the arms (25, 26) of the covering (20, 50), the arms (25, 26) extend parallel to one another over at least 50% of the depth (t) of the gripping jaw (16).

13. Covering according to claim 12,
**characterised in that** in the area of the connecting section (27) the covering (20, 50) has at least one offset (32) for the interlocked fixing of the covering (20, 50) onto the hook (8), and to the side of the offset (32) the covering (20, 50) has, in particular, at least one stiffening section (33).

14. Covering according to claims 12 or 13,
**characterised in that** in the said connecting area (27) the covering (20, 50) has at least one assembly ramp (42).

15. Covering according to any of claims 12 to 14,
**characterised in that** on its outer side (35) facing away from the gripping jaw (16) the covering (20, 50) has a slit (28, 52).

16. Covering according to claim 15,
**characterised in that** the slit (28) extends over the entire outside (35) of the covering (20) from the free end (36) of the first arm (25) to the free end (27) of the second arm (26).

17. Covering according to claim 15,
**characterised in that** the slit (52) in the outside (35) of the covering (50) extends from the free end (36) of a first arm (25) at least as far as the connecting area (27), and a second arm (26) of the covering (50) is closed on the outside (35) of the covering (50).

18. Covering according to claims 16 or 17,
**characterised in that** in a central area of at least one arm (25, 26) the slit (28, 52) is made wider, and in particular the sections of the covering (20, 50) that delimit the slit (28, 52) in the connecting area (27) are pre-stressed relative to one another, the covering (20) advantageously being formed mirror-symmetrically and the thickness (h) of the covering (20, 50) between the holding space (39) and the gripping jaw (16) being in particular approximately 5 mm to approximately 15 mm in the area of the arms (25, 26).

19. Covering according to any of claims 12 to 18,
**characterised in that** the covering (20, 50) consists of natural rubber, in particular with a hardness of around 60 to around 80 Shore.

20. Covering according to any of claims 12 to 19,
**characterised in that** a securing clamp (60, 61) is arranged in the connecting area (27), which bridges across the connecting area (27).

21. Covering according to claim 20,
**characterised in that** the securing clamp (60, 61) is positioned lower relative to the surface of the covering (20), preferably lower by approximately 0.5 mm to 10 mm.

## Revendications

1. Crochet pour l'extrémité (12) d'une barre de secouage (6) d'un appareil de récolte (1), étant précisé que le crochet (8) comprend un corps de base en U (13) avec deux branches (22, 23) et une zone de liaison (24) entre celles-ci, et une chape en U (20, 50) qui est fixée de manière amovible au corps de base (13), qui délimite une fourche (16) et qui est conçue d'une seule pièce, que le corps de base (13) du crochet (8) présente une surface de base (14) et une nervure transversale (15) qui s'étend transversalement par rapport à la surface de base (14), et que la chape (20, 50) est fixée sur le crochet (8) par complémentarité de forme et/ou par friction, **caractérisé en ce que** la nervure transversale (15) forme sur les branches (22, 23) du corps de base (13) des rebords de guidage (19) parallèles, étant précisé qu'une branche (25, 26) de la chape (20, 50) est glissée sur chaque rebord de guidage (19) et que les rebords de guidage (19), à partir des extrémités libres (36, 37) des branches (25, 26) de la chape (20, 50), s'étendent sur au moins 50% de la profondeur (t) de la fourche (16) mesurée parallèlement aux rebords de guidage (19).

2. Crochet selon la revendication 1,
**caractérisé en ce que** la chape (20, 50) est fixée au corps de base (13) par complémentarité de forme dans la zone de liaison (24) dudit corps de base (13), étant précisé que la chape (20, 50) présente en particulier un épaulement (32) qui vient en prise derrière la nervure transversale (15) dans la zone de liaison (24), et que la chape (20, 50), avantageusement, entoure complètement la nervure transversale (15) dans la zone de liaison (24) du corps de base (13).

3. Crochet selon la revendication 2,
**caractérisé en ce qu'**il est prévu, formé dans la chape (20, 50) et destiné au corps de base (13), un logement (39) dont la largeur (k) dans la zone des branches (25, 26) de la chape (20, 50) et dans la zone de l'épaulement (32) correspond à peu près à la largeur (e) de la nervure transversale (15).

4. Crochet selon l'une des revendications 1 à 3,
**caractérisé en ce que** la chape (20, 50), dans la zone des extrémités libres (36, 37) de ses branches (25, 26), est fixée par friction au corps de base (13).

5. Crochet selon l'une des revendications 1 à 4,
**caractérisé en ce que** la chape (20, 50) présente sur son côté extérieur (35) opposé à la fourche (16) une fente (28, 52).

6. Crochet selon la revendication 5,
**caractérisé en ce que** la fente (28) s'étend sur tout le côté extérieur (35) de la chape (20), de l'extrémité libre (36) de la première branche (25) jusqu'à l'extrémité libre (37) de la seconde branche (26), étant précisé que ladite fente (28, 52) présente en particulier près d'au moins une extrémité libre (36, 37) d'une branche (25, 26) de la chape (20, 50) une largeur (r) qui correspond à peu près à la largeur (s) de la surface de base (14) du corps de base (13) dans cette zone, et que la surface de base (14) dépasse avantageusement de la chape (20, 50) à travers la fente (28, 52) sur toute la longueur de la fente (28).

7. Crochet selon la revendication 5,
**caractérisé en ce que** la fente (52) s'étend sur le côté extérieur (35) de la chape (50) de l'extrémité libre (36) d'une première branche (25) jusqu'à au moins la zone de liaison (27), et **en ce qu'**une seconde branche (26) de la chape (50) a une forme fermée sur le côté extérieur (35) de la chape (50).

8. Crochet selon l'une des revendications 5 à 7,
**caractérisé en ce que** la fente (28, 52) a une forme élargie dans la zone d'un raccord (18) pour la barre de secouage (6).

9. Crochet selon l'une des revendications 1 à 8,
**caractérisé en ce que** la distance (f), mesurée perpendiculairement à l'axe de déplacement (9) de la barre de secouage (6), entre l'axe médian d'un raccord (18) pour la barre de secouage (6) et le fond (38) de la fourche (16) disposé dans la zone de liaison (24) est plus petite que la distance (g) par rapport aux extrémités libres (36, 37) des branches (25, 26) de la chape (20, 50).

10. Crochet selon l'une des revendications 1 à 9,
**caractérisé en ce que** la surface de base (14) du crochet (8) est plus large dans la zone de liaison (24) que dans la zone des branches (22, 23), **en ce que** la largeur (c), mesurée perpendiculairement à la nervure transversale (15), de la surface de base (14) dans la zone des branches (22, 23) augmente en particulier des extrémités libres (43, 44) des branches (22, 23) jusqu'à la zone de liaison (24), et **en ce que** la nervure transversale (15) présente une épaisseur (d) mesurée perpendiculairement au plan de la surface de base (14) qui est avantageusement plus grande que la largeur (e) de la nervure (15) mesurée parallèlement à la surface de base (14), étant précisé que l'épaisseur (d) de la nervure transversale (15) est en particulier environ deux à dix fois plus grande que la largeur (e), et que l'épaisseur (d) de la nervure transversale (15) correspond avantageusement à environ 70% à 100% de la largeur (c) maximale de la surface de base (14) dans la zone de liaison (24).

11. Crochet selon l'une des revendications 1 à 10,
**caractérisé en ce que** le crochet (8) se compose d'un métal léger, en particulier de magnésium.

12. Chape à fixer par complémentarité de forme et/ou par force à un crochet (8) disposé à l'extrémité (12) d'une barre de secouage (6) d'un appareil de récolte (1), étant précisé que la chape (20, 50) est conçue d'une seule pièce et en U, et présente deux branches (25, 26) et une zone de liaison (27) entre les branches (25, 26), qu'un logement (39) pour le crochet (8) est formé dans la chape (20, 50), et que la chape (20, 50) délimite une fourche (16),
**caractérisée en ce que** les branches (25, 26) de la chape (20, 50), à partir de leurs extrémités libres (36, 37), s'étendent parallèlement l'une par rapport à l'autre sur au moins 50% de la profondeur (t) de la fourche (16).

13. Chape selon la revendication 12,
**caractérisée en ce que** la chape (20, 50) présente dans la zone de liaison (27) un épaulement (32) pour la fixation par complémentarité de forme de ladite chape (20, 50) sur le crochet (8), et **en ce que** la chape (20, 50) présente sur le côté de l'épaulement (32) en particulier au moins une partie de renforcement (33).

14. Chape selon la revendication 12 ou 13,
**caractérisée en ce que** la chape (20, 50) présente dans la zone de liaison (27) au moins un biseau de montage (42).

15. Chape selon l'une des revendications 12 à 14,
**caractérisée en ce que** la chape (20, 50) présente sur son côté extérieur (35) opposé à la fourche (16) une fente (28, 52).

16. Chape selon la revendication 15,
**caractérisée en ce que** la fente (28) s'étend sur tout le côté extérieur (35) de la chape (20), de l'extrémité libre (36) de la première branche (25) jusqu'à l'extrémité libre (37) de la seconde branche (25).

17. Chape selon la revendication 15,
**caractérisée en ce que** la fente (52) s'étend sur le côté extérieur (35) de la chape (50) de l'extrémité libre (36) d'une première branche (25) jusqu'à au moins la zone de liaison (27), et **en ce qu'**une seconde branche (26) de la chape (50) sur le côté extérieur (35) de celle-ci a une forme fermée.

18. Chape selon la revendication 16 ou 17,
**caractérisée en ce que** la fente (28, 52) a une forme élargie, dans une zone centrale d'au moins une branche (25, 26), et **en ce que** les parties de la chape (20, 50) qui délimitent en particulier la fente (28, 52) dans la zone de liaison (27) sont contraintes l'une vers l'autre, étant précisé que la chape (20) a avantageusement une forme en miroir et que l'épaisseur (h) de la chape (20, 50) entre le logement (39) et la fourche (16) dans la zone des branches (25, 26) est en particulier d'environ 5 mm à environ 15 mm.

19. Chape selon l'une des revendications 12 à 18,
**caractérisée en ce que** la chape (20, 50) se compose de caoutchouc naturel qui présente en particulier une dureté d'environ 60 à environ 80 Shore.

20. Chape selon l'une des revendications 12 à 19,
**caractérisée en ce qu'**il est prévu dans la zone de liaison (27) une agrafe de sécurité (60, 61) qui couvre une fente (28, 52) de la zone de liaison (27).

21. Chape selon la revendication 20,
**caractérisée en ce que** l'agrafe de sécurité (60, 61) est placée en retrait par rapport à la surface de la chape (20), de préférence à une profondeur d'environ 0,5 mm à 10 mm.
